# EUROPEAN PATENT APPLICATION

(11) **EP 1 701 569 A1**
(43) Date of publication of application: **13.09.2006**
(21) Application number: 05102163.2
(22) Date of filing: 18.03.2005
(51) Int. Cl.: H04Q 7/38

(54) **Communication system and mobile station with enhanced handling of call establishment**

(30) Priority: 11.03.2005 JP 2005069582
(71) Applicant: KABUSHIKI KAISHA TOSHIBA, Tokyo 105-8001 (JP)
(72) Inventor: Kiyomoto, Moriaki Toshiba Corporation, Tokyo (JP)
(74) Representative: Henkel, Feiler & Hänzel

(57) **Abstract**

A communication system in which a calling party mobile station is capable of automatically obtaining information on a plurality of currently available communication modes of a called party mobile station and charge rate information to enable a user of the calling party mobile station to determine which mode is to be used for communication with the called party mobile station based on the information thus obtained. The called party mobile station notifies information on currently available communication modes to a circuit switching station. The circuit switching station stores position information and communication mode information of the called party mobile station, and obtains information on the service provider and so on of the called party mobile station from another switching station. The calling party mobile station places a call for the called party mobile station, to the circuit switching station. The circuit switching station obtains registered information of the called party mobile station from the circuit switching station, calculates a unit price, and notifies the unit price to the calling party mobile station. The calling party mobile station displays the unit price to enable the user to select a communication mode and originate a call.

## Description

### CROSS-REFERENCE TO RELATED APPLICATIONS

This application is based upon and claims the benefit of priority from the prior Japanese Patent Application No. 2005-69582, filed on March 11, 2005; the entire contents of which are incorporated herein by reference.

### BACKGROUND OF THE INVENTION

### 1. Field of the Invention

The present invention relates to a communication system in which a calling party mobile station automatically obtains information on a plurality of communication modes supported by a called party mobile station and information on charge rates for the respective communication modes to allow a user of the calling party mobile station to determine, based on the information thus obtained, which communication mode is to be used to perform telephone call communication with the called party mobile station, or to cancel the telephone call, and also relates to a mobile station for such communication system.

### 2. Description of the Related Art

There have been proposed communication control methods and radio telephone terminals which are capable of preventing a calling party radio telephone terminal from being charged a high calling charge when calling a called party radio telephone terminal without knowing that the called party radio telephone terminal is abroad. Note that the above-described technique is disclosed in Japanese Patent Application Laid-Open No. 2003-289580 (Baba et al.).

Baba et al. describe a communication control method and a radio telephone terminal in which, when a radio telephone terminal 40 (called party) has entered a foreign country, terminal position information 10a indicating that the radio telephone terminal 40 is in the foreign country is notified to a home station mobile switching device10 via a visitor station mobile switching device 20.

A calling party radio telephone terminal 30 then transmits a call request for the radio telephone terminal 40 (called party). Upon receiving the call request, the home station mobile switching device 10 provides overseas stay information 30a to the calling party radio telephone terminal 30 if determining that the radio telephone terminal 40 (called party) is in a foreign country. The overseas stay information 30a includes, for example, not only the name of the country where the radio telephone terminal 40 (called party) is located but also a calling charge per unit time for a call to the country and local time in the country when the call request is made.

The calling party radio telephone terminal 30 displays the received overseas stay information 30a on a display A user of the calling party radio telephone terminal 30 is allowed to see the information thus displayed to determine whether the call is to be continued or canceled.

There also have been proposed mobile communication devices (multimode portable telephone devices) having a plurality of communication protocols including IMT2000 and PDC and designed to automatically select a less expensive communication protocol depending on a called party. Note that the above-described technique is disclosed in Japanese Patent Application Laid-Open No. 11-275272 (Fujisawa).

The mobile communication device described in Fujisawa specifies a plurality of communication protocols of a called party's device based on the called party's telephone number that is keyed in when calling. The mobile communication device then selects communication protocols currently available from among the plurality of communication protocols and calculates a calling charge per unit time for each of the selected communication protocols. Based on the calculation results, the least expensive communication protocol is used.

According to the communication control method and the radio telephone terminal described in Japanese Patent Application No. 2003-289580, the user is allowed to know a calling charge per unit time only for a single telephone call mode but not to know a plurality of communication modes of a called party's radio telephone terminal before determining whether the call is to be continued or canceled. Therefore, there has been a problem in that the user is unable to select a communication mode to be used to call the called party's radio telephone terminal.

The mobile communication device disclosed in Japanese Patent Application Laid-Open No. 11-275272 specifies a plurality of communication protocols of a called party's device from the called party's telephone number keyed in, based on a database or the like prestored locally in the mobile communication device. Data on the calling charges per unit time for these respective communication protocols are also prestored locally in an ROM of the mobile communication device. Consequently, it is troublesome for a user to know a plurality of communication protocols of a called party's device and to previously know and update data on the calling charges per unit time for the respective communication protocols. Additionally, a caller party is allowed to know a plurality of communication protocols including IMT2000 and PDC, but not to specify communication modes such as speech telephone call, E-mail, SMS, and TV telephone call modes that are available in the standby condition for the respective communication protocols.

### SUMMARY OF THE INVENTION

It is an object of this invention to provide a communication system in which a calling party mobile station automatically obtains information on a plurality of communication modes that are currently available by a called party mobile station and information on charge rates to allow a user of the calling party mobile station to determine, based on the information thus obtained, which communication mode is to be used to perform telephone call communication with the called party mobile station, or to cancel the telephone call, and to provide a control method for the communication system, and a mobile station for the communication system.

In order to achieve the above-mentioned object, the communication system according to an aspect of the present invention is a communication system comprising a mobile station and a switching station for managing the mobile station, wherein the mobile station comprises: a unit which requests position registration to the switching station; a unit which notifies communication mode information to the switching station; a unit which requests a call directed to another mobile station; a unit which displays communication unit price information for each of communication modes transmitted from the switching station; and a unit which originates a call in a communication mode selected by means of an operation key, and wherein the switching station comprises: a unit which stores position information of the mobile station which has requested the position registration; a unit which stores the communication mode information transmitted from the mobile station; a unit which receives a call request for another mobile station from the mobile station; a communication unit price calculating unit which calculates a communication unit price for each of communication modes which are supported by the mobile station designated by the request; and a unit which notifies the calculated communication unit price information for each of the communication modes to the mobile station which has placed the call request.

According to an aspect of the present invention, a user of a calling party mobile station is allowed to know, when placing a call, all the communication modes that are currently available by a called party mobile station from among the communication modes supported by the called party mobile station, and also allowed to know a unit price for communication between the calling party mobile station and the called party mobile station for each of the communication modes. Therefore, the user of the calling party mobile station is allowed to have a higher degree of freedom in selection of a communication mode by referring to information on both the communication modes supported by the called party and the unit prices, and is allowed, for example, to select a less expensive communication mode, or to select the TV telephone call mode if he/she wants to see the face of the called party. Further, information on the unit prices can be kept always accurate because the information is managed and constantly updated to reflect the latest information by a switching station.

### BRIEF DESCRIPTION OF THE DRAWINGS

Fig. 1 is a schematic diagram showing a mobile communication system according to an embodiment of the present invention;
Fig. 2 is a block diagram showing a configuration of a mobile station according to the embodiment of the present invention;
Fig. 3 is a block diagram showing a configuration of a circuit switching station according to the embodiment of the present invention;
Fig. 4 is a schematic diagram showing a mobile station position information storage unit of the circuit switching station according to the embodiment of the present invention;
Fig. 5 shows a mobile station mode information storage unit of the circuit switching station according to the embodiment of the present invention;
Fig. 6 is a schematic diagram showing a unit price calculating information storage unit of the circuit switching station according to the embodiment of the present invention;
Fig. 7 is a sequence diagram of the mobile communication system according to the embodiment of the present invention;
Fig. 8 is a flowchart of the mobile station according to the embodiment of the present invention; and
Fig. 9 is a flowchart of the switching station according to the embodiment of the present invention.

### DETAILED DESCRIPTION OF THE INVENTION

Embodiments of the present invention will now be described with reference to the drawings.

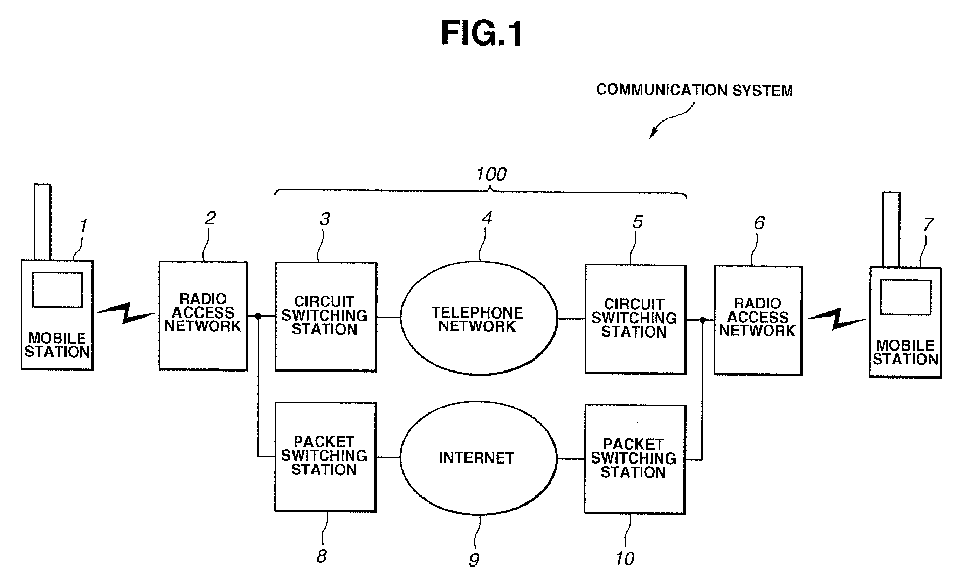

Fig. 1 is a schematic diagram showing a mobile communication system according to an embodiment of the present invention. The mobile communication system includes a mobile station 1, a radio access network 2, a circuit switching station 3, a telephone network 4, a circuit switching station 5, a radio access network 6, a mobile station 7, a packet switching station 8, the Internet 9, a packet switching station 10 and so on. The radio access networks 2 and 6 each includes a radio base station, a base station controller and the like, which are not shown in the drawirig. The circuit switching stations 3 and 5 each includes various switching stations (not shown) and each serves as a circuit switching core network which controls voice communication performed in the telephone network 4. The circuit switching stations 3 and 5 are principally used for voice communication. The packet switching stations 8 and 10 each includes various switching stations (not shown) and each serves as a packet core network which controls packet data in the Internet 9. The packet switching stations 8 and 10 are principally used for E-mails or the like.

The switching station group including the circuit switching station 3, the circuit switching station 5, the packet switching station 8, the packet switching station 10 will be referred to as a core network switching station 100.

In A11-IP (Internet Protocol) network, there is no differentiation between the circuit switching core network and the packet core network, and the core network is integrated in an IP-based packet core network. Such switching station group will also be referred to as the core network switching station 100.

The mobile stations perform communication with the core network switching stations via the radio access networks. However, in the following description, description of the fact that the communication is performed via the radio access networks will be omitted.

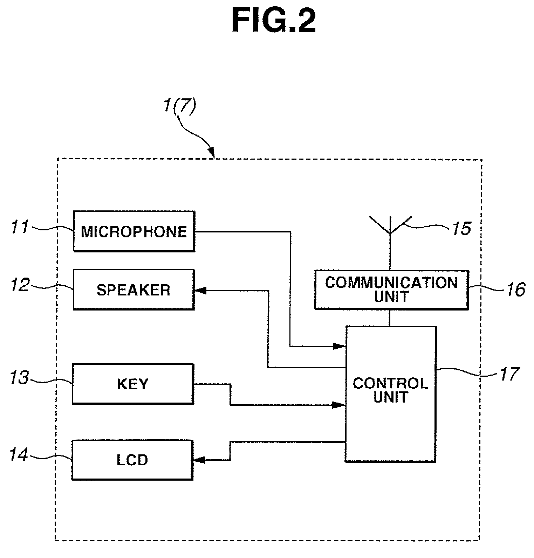

Fig. 2 is a block diagram showing a configuration of a mobile station according to an embodiment of the present invention. The principal part of the mobile station 1 (and mobile station 7) includes a microphone 11, a speaker 12, a key 13, an LCD 14, an antenna 15, a communication unit 16, a control unit 17 and so on.

The microphone 11 and the speaker 12 serve as voice input/output means for a user to make telephone conversation. The key 13 serves as input means for the user to perform manual operation. The LCD 14 is liquid crystal display means. The antenna 15 transmits and receives radio waves to and from the radio access network 2 (and the radio access network 6) to perform mobile communication. The communication unit 16 performs modulation and demodulation of the radio signals transmitted and received by the antenna 15.

The control unit 17, including a CPU, an I/O, a memory and so on, performs man-machine interface control such as voice input/output control the with the microphone 11 and speaker 12, key input control with the key input unit 13, and display output control with the LCD14. The control unit 17 controls the communication unit 16 to control mobile communication with the radio access network 2 (and the radio access network 6).

The mobile station 1 (and the mobile station 7) has a plurality of standby modes, such as analog and CDMA (Code Division Multiple Access) modes in North America, and GSM (Global System for Mobile communication) and WCDMA (Wideband CDMA) modes in EU. The mobile station stands by in a standby mode preset by the user. The mobile station has communication modes such as telephone call, E-mail, SMS (short messaging service), and TV telephone call modes. The mobile station may have a high-speed data communication mode or other communication modes. In general, a same number is used for both telephone and TV telephone numbers and the user is allowed to select either the voice call or TV telephone call when placing a call. Available communication modes are different for each standby mode.

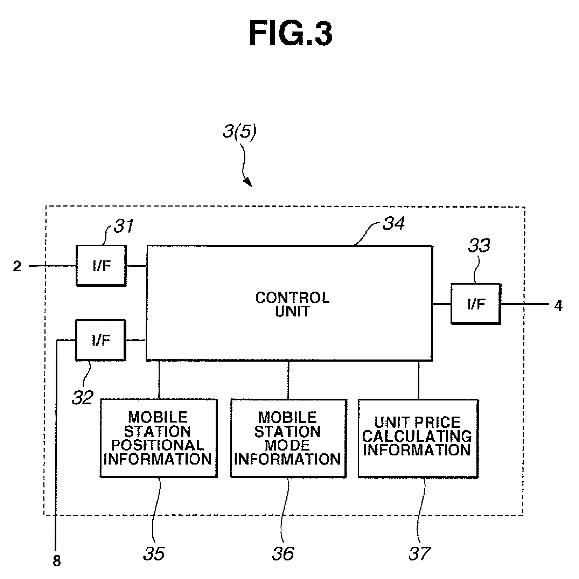

Fig. 3 is a block diagram showing a configuration of a circuit switching station according an embodiment of the present invention. The principal part of the circuit switching station 3 (and the circuit switching station 5) includes a base station I/F 31, a packet switching station I/F 32, a telephone network I/F 33, a control unit 34, a mobile station position information storage unit 35, mobile station mode information storage unit 36, a unit price calculating information storage unit 37 and so on.

The base station I/F 31 is an interface with the radio access network 2. The packet switching station I/F 32 is an interface with the packet switching station 8. The telephone network I/F 33 is an interface with the telephone network 4.

The control unit 34 performs position registration and subscriber verification for mobile stations, and stores country information and LA (Location Area) information of a location where a mobile station which has provided a position registration message exists. During circuit switching, a radio access network where the base station is disposed is divided into LAs and managed in LA units. Generally, one LA includes a plurality of base stations.

The packet switching station 8 (and the packet switching station 10) manages RA (Routing area) information in RA units.

The control unit 34 also manages terminal mode information and communication charge information. Further, the control unit 34 controls communication with the radio access network 2, the telephone network 4, and the packet switching station 8.

The mobile station position information storage unit 35 stores position information of a mobile station having provided a position registration message for each of mobile stations. The mobile station mode information storage unit 36 stores supporting communication modes which are currently available and notified by a mobile station for each of mobile stations. The unit price, for instance communicating rate per minute, calculating information storage unit 37 stores a database for calculating a unit price for each of the communication modes. The database contains an input event group which affects the unit price and calculating formulas defined on the basis of the input event group. The input event group which affects the unit price includes the position of the mobile station, information on a service provider to which the mobile station subscribes, and subscribed services.

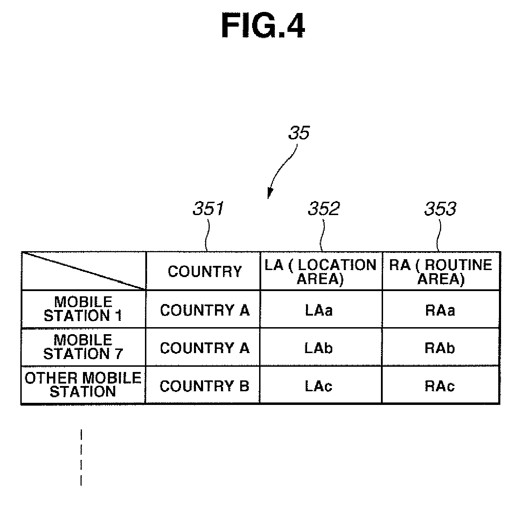

Fig. 4 is a schematic diagram illustrating the mobile station position information storage unit of the circuit switching station according the embodiment of the present invention. The mobile station position information storage unit 35 in the circuit switching station 3 (and the circuit switching station 5) stores country information 351, LA (Location Area) information 352, and RA (Routing Area) information 353 of a location where a mobile station exists for each of mobile stations. The RA (Routing Area) information 353 is information obtained from the packet switching station 8.

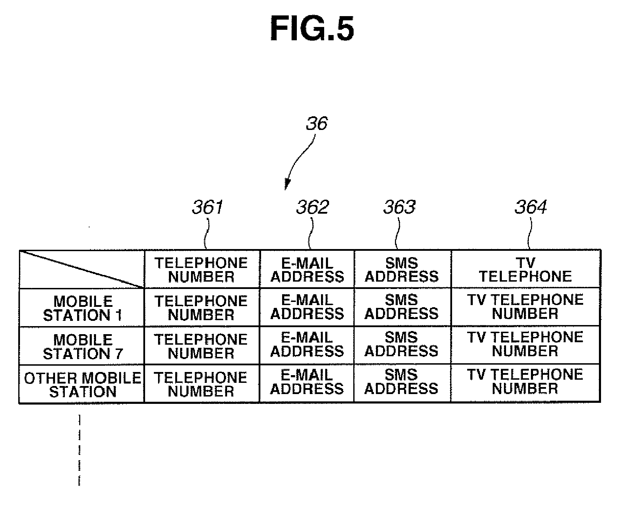

Fig. 5 is a schematic diagram illustrating the mobile station mode information storage unit in the circuit switching station according to the embodiment of the present invention. The mobile station mode information storage unit 36 in the circuit switching station 3 (and the circuit switching station 5) stores supporting communication modes which are currently available and notified by a mobile station for each of mobile stations. For example, the supporting communication modes currently available by the mobile station 1 are telephone call, E-mail, SMS (short messaging service), and TV telephone call modes. When the mobile station 1 has notified these communication modes and associated numbers, these are recorded as information on the mobile station 1 in a telephone number field 361, E-mail address field 362, SMS address field 363, and TV telephone number field 364, respectively. A same number is generally used for both the telephone number and the TV telephone number, while it can be seen that the mobile station 1 supports both the voice telephone call and TV telephone call modes. These information items are recorded in a similar manner also for the mobile station 7 and other mobile stations.

The packet switching station also has a similar mobile station mode information storage unit. Detailed description thereof will be omitted.

The supporting communication modes may further include a high-speed data communication mode and other modes in addition to the telephone, E-mail, SMS, and TV telephone call modes.

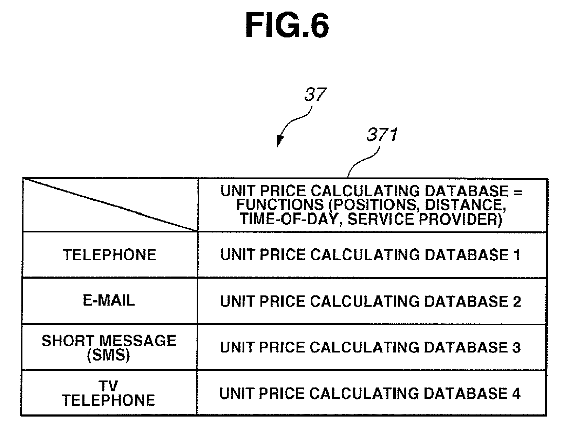

Fig. 6 is a schematic diagram illustrating the unit price calculating information storage unit of the circuit switching station according to the embodiment of the present invention. The unit price calculating information storage unit 37 of the circuit switching station 3 (and the circuit switching station 5) stores a database 371 for calculating a unit price for each of the communication modes. The database 371 contains an input event group affecting the unit price and calculating formulas defined on the basis of the input event group. In case of the telephone mode, for example, the input event group affecting the unit price includes positions of two involved terminals, distance between the terminals, time of day, and types of service providers. Various services are provided for communicating rates, and relationships between the input events and the unit prices are prescribed precisely for these services.

The packet switching station 8 (and the packet switching station 10) also has similar functions to those shown in Figs. 3 to 6, while detailed description thereof will be omitted.

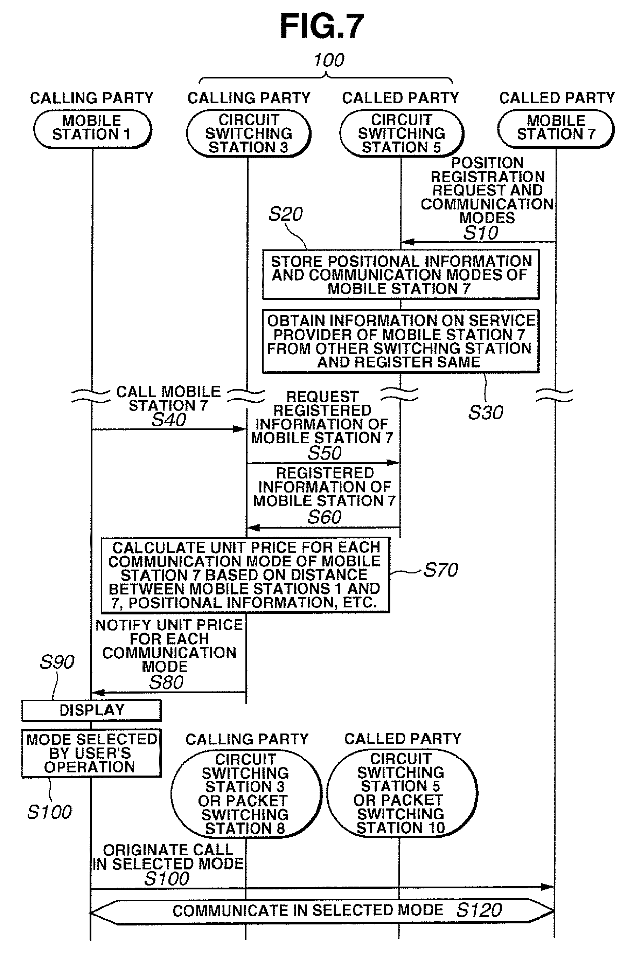

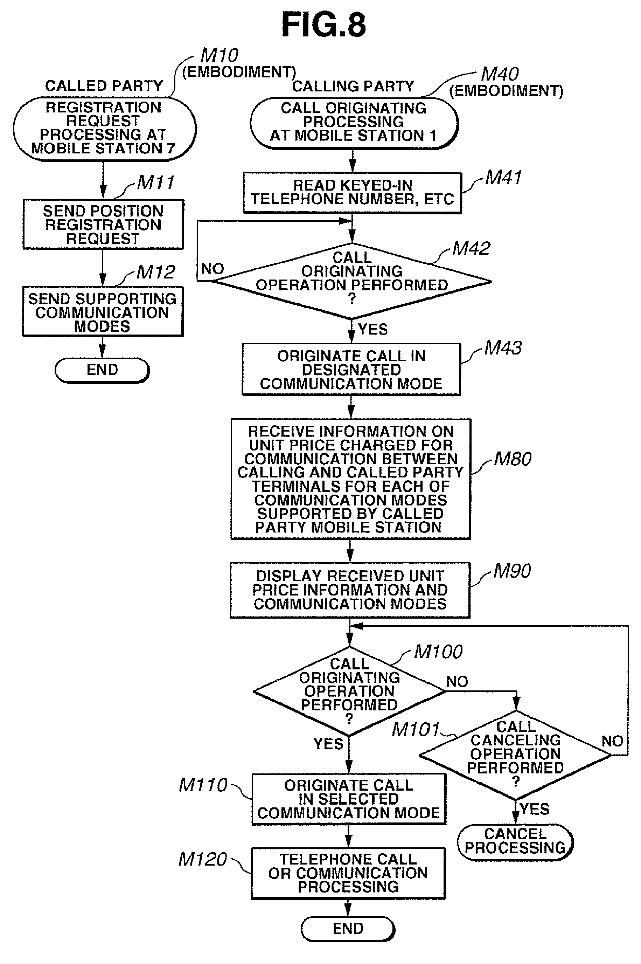

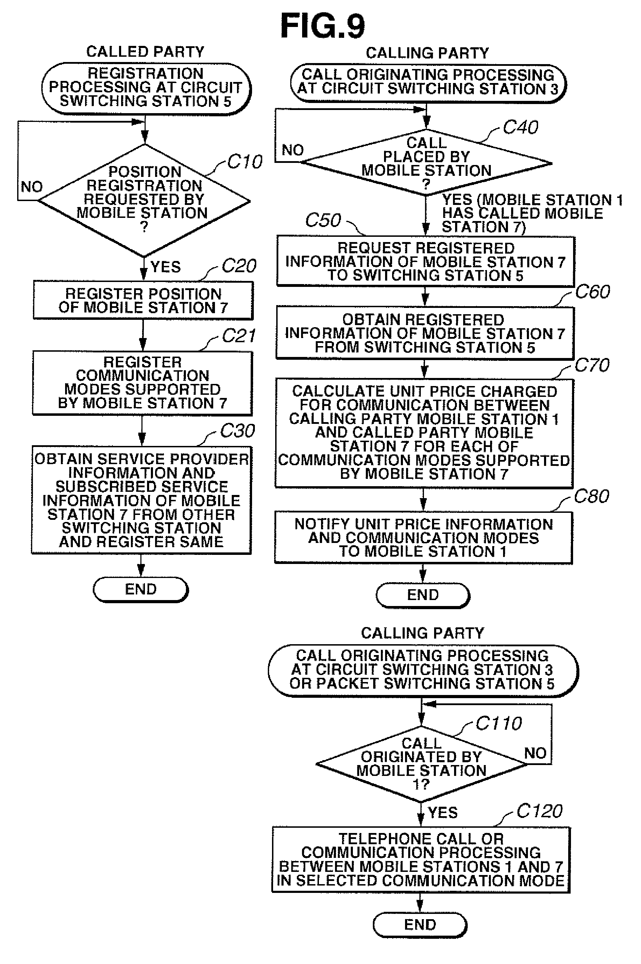

Operation of the mobile communication system will now be described with reference to Figs. 7 to 9. Fig. 7 is a sequence diagram of the mobile communication system according to the embodiment of the present invention. Fig. 8 is a flowchart of the mobile station according to the embodiment of the present invention. Fig. 9 is a flowchart of the switching station according to the embodiment of the present invention.

Description will be made on the case in which the mobile station 1 serves as a calling party and the mobile station 7 serves as a called party.

### (Registration Processing)

The called party mobile station 7 sends a normal position registration message to the circuit switching station 5 (step S10 (Sequence) in Fig. 7, step M10 (Mobile) in Fig. 8, and step C10 (Center) in Fig. 9). The mobile station 7, which supports a plurality of standby modes, such as analog and CDMA modes in North America, and GSM and WCDMA modes in EU, notifies communication modes that can be used in the standby mode currently set (e.g. telephone, E-mail, SMS, and TV telephone call modes) to the circuit switching station 5 (S11, M11, and C11). This step is implemented every time the standby mode is changed in the mobile station 7.

Alternatively, the mobile station 7 may notify all the communication modes supported thereby to the circuit switching station 5, and the circuit switching station 5 may recognize a standby mode currently set for the mobile station 7 to determine a communication mode that can be used in the standby mode currently set for the mobile station 7.

The position information and the communication modes of the mobile station 7 are stored in the mobile station position information storage unit and the mobile station mode information storage unit of the circuit switching station 5, respectively (S20, C20 to C21). The circuit switching station 5 obtains from another switching station and registers information on the service provider to which the mobile station 7 subscribes and information on services subscribed by the mobile station 7 (S30, C30). The packet switching station 10 also implements similar processing as the steps S 10 to S30 described above, while detailed description thereof will be omitted. The registration processing is thus terminated.

### (Call Originating Processing)

It is now presumed that the calling party mobile station 1 then places a call to the called party mobile station 7 by using a telephone number for the voice communication mode (S40, M40 to M43). Upon receiving the call (YES in C40), the circuit switching station 3 checks the routine to the mobile station 7 and requests registered information of the mobile station 7 to the circuit switching station 5 (S50, C50). The circuit switching station 3 thus obtains the registered information of the mobile station 7 from the circuit switching station 5 (S60, C60).

The circuit switching station 3 refers to the unit price calculating information storage unit 37 to calculate a unit price that is charged for communication between the calling party mobile station 1 and the called party mobile station 7 for each of the communication modes supported by the mobile station 7. This calculation is made by referring to the unit price calculating information storage unit 37 on the basis of the events relating to the price such as the registered positions of the mobile station 1 and the mobile station 7, the distance between them, the current time of day, the service providers, and the services prescribed (S70, C70). The circuit switching station 3 notifies, to the mobile station 1, the unit price information for each of the communication modes supported by the mobile station 7 (S80, C80), and the processing by the circuit switching station 3 is terminated temporarily.

If the information on the communication modes supported by the mobile station 1 is notified to the circuit switching station 3 while the mobile station 1 is in the stand-by state, the circuit switching station 3 may calculate unit prices only for the communication modes which are compatible between the mobile station 1 and the mobile station 7 and notify the calculated prices to the mobile station 1.

If the call originated by the mobile station 1 in step S40, M40 is an E-mail, the packet switching station 8 implements similar processing to the processing described in relation to steps S40 to S80 above. Detailed description thereof will be omitted.

Upon receiving the unit price information for each of the communication modes, the mobile station 1 displays this information (S90, M90). The mobile station 1 may not only display the unit price information for each of the communication modes supported by the mobile station 7 that has been notified by the circuit switching station 3 but also display the communication modes supported by the mobile station 1 and compatible with the mobile station 7 while discriminating them from other communication modes. This allows the user to select a communication mode more easily. The user refers to the display to perform an operation for selecting one of the communication modes or for canceling the call (S110, M100, and M101). If the user performs the canceling operation (YES in M101), the mobile station 1 implements the cancel processing. If the user selects one of the communication modes and performs a call originating operation (YES in M100), the mobile station 1 originates a call in the selected communication mode (M110).

When the selected communication mode is the voice communication mode, telephone call processing is implemented with the mobile station 7 via the circuit switching station 8 and the circuit switching station 5 (S120, M120). When the selected communication mode is a data communication mode such as E-mail or SMS communication mode, body text of the E-mail or SMS message is input before the communication processing with the mobile station 7 is carried out via the packet switching station 8 and the packet switching station 10 (S120, M120).

The processing by each of the switching stations in the core network switching station 100 is not limited to the examples described above. The processing may be shared among the switching stations or the database may be shared among the switching stations, if required.

According to the processing described above, the calling party mobile station 1 displays information on unit prices charged for communication between the mobile station 1 and a designated called party mobile station 7 for the respective communication modes that are supported and are currently available by the mobile station 7. As a result, the user of the mobile station 1 is allowed to have a higher degree of freedom in selection of a communication mode by referring to information on both the supporting communication modes supported and the unit prices. For example, the user is allowed to select a less expensive communication mode or to select the TV telephone call mode if he/she wants to see the face of the called party.

In the embodiments described above, the calling party is notified of communication modes which are supported by and are currently available the called party mobile station 7 and unit prices for these communication modes. However, the present invention is not limited to this. The calling party may be notified of all the communication modes supported by the called party mobile station 7 and the unit prices for them so that the calling party selects one from among all the supporting communication modes of the mobile station 7 to originate a call. Communication may fail from time to time according to this method. If this happens, a call may be originated again in another communication mode at the expense of the user of the calling party mobile station. The present invention provides, even in this case, at least an advantage of enabling the calling party to know all the communication modes supported by the called party mobile station 7.

## Claims

1. A communication system comprising a mobile station and a switching station for managing the mobile station,
wherein the mobile station comprises:
means for requesting position registration to the switching station;
means for notifying communication mode information to the switching station; means for requesting a call directed to another mobile station;
means for displaying communication unit price information for each of communication modes transmitted from the switching station; and
means for originating a call in a communication mode selected by a user, and
wherein the switching station comprises:
means for storing position information of the mobile station which has requested the position registration;
means for storing the communication mode information transmitted from the mobile station;
means for receiving a call request for another mobile station from the mobile station;
communication unit price calculating means for calculating a communication unit price for each of communication modes which are supported by the mobile station designated by the request; and
means for notifying the calculated communication unit price information for each of the communication modes to the mobile station which has placed the call request.

2. A communication system comprising a mobile station and a switching station for managing the mobile station,
wherein the mobile station comprises:
means for requesting position registration to the switching station;
means for notifying communication mode information to the switching station; means for requesting a call directed to another mobile station;
means for displaying communication unit price information for each of communication modes transmitted from the switching station; and
means for originating a call in the communication mode selected by a user, and
wherein the switching station comprises:
means for storing position information of the mobile station which has requested the position registration;
means for storing the communication mode information transmitted from the mobile station;
means for notifying the position information and the communication mode information of the mobile station requested by another switching station;
means for receiving a call directed to another mobile station from the mobile station;
means for receiving the position information and the communication mode information of the mobile station notified by another switching station;
communication unit price calculating means for calculating a communication unit price for each of communication modes supported by the mobile station that is subject to be called; and
means for notifying the calculated communication unit price information to the mobile station which has originated the call request.

3. The communication system according to Claim 1, wherein the communication unit price calculating means of the switching station calculates a communication unit price based on a communication mode which is compatible between two mobile stations among the communication modes supported by these two mobile stations.

4. The communication system according to Claim 2, wherein the communication unit price calculating means of the switching station calculates a communication unit price based on a communication mode which is compatible between two mobile stations among the communication modes supported by these two mobile stations.

5. A mobile station for performing communication with another mobile station via a switching station, comprising:
means for requesting position registration to the switching station;
means for notifying communication mode information to the switching station; means for requesting a call directed to another mobile station;
means for receiving information on a communication unit price charged for communication with said another mobile station for each of the communication modes, the communication unit price information being notified by the switching station in response to the call request for said another mobile station;
means for displaying the received communication unit price information for each of the communication modes; and
means for originating a call in the communication mode selected by a user.

6. A mobile station for performing communications with another mobile station via a switching station, comprising:
means for requesting position registration of the mobile station to the switching station;
means for notifying information on communication modes supported by the mobile station to the switching station;
means for requesting a call directed to another mobile station to the switching station;
means for receiving information on a communication unit price charged for communication with said another mobile station, the communication unit price information being notified by the switching station in response to the call request for said another mobile station;
means for displaying the received communication unit price information for each of the communication modes while discriminating and displaying a communication mode which is compatible between the mobile station and said another mobile station; and
means for originating a call according to the communication mode selected by a user.
